Europäisches Patentamt

(19) European Patent Office

Office européen des brevets

(11) Publication number : **0 218 510 B2**

# (12) NEW EUROPEAN PATENT SPECIFICATION

(45) Date of publication of the new patent specification : **03.06.92 Bulletin 92/23**

(51) Int. Cl.⁵ : **B60T 13/24**

(21) Application number : **86402048.2**

(22) Date of filing : **18.09.86**

㊾ Servo motor for assisted braking.

(30) Priority : **30.09.85 FR 8514454**

(43) Date of publication of application :
**15.04.87 Bulletin 87/16**

(45) Publication of the grant of the patent :
**28.12.88 Bulletin 88/52**

(45) Mention of the opposition decision :
**03.06.92 Bulletin 92/23**

(84) Designated Contracting States :
**DE GB IT**

(56) References cited :
**EP-A- 0 158 552**
**DE-C- 3 318 744**
**FR-A- 1 512 696**
**FR-A- 2 561 599**

(73) Proprietor : **BENDIX France**
**126, rue de Stalingrad**
**F-93700 Drancy (FR)**

(72) Inventor : **Gautier, Jean-Pierre**
**46 ter, Avenue Louis Blanc**
**F-93600 Aulnay/Bois (FR)**

(74) Representative : **Lejet, Christian et al**
**BENDIX FRANCE Division Technique Service**
**Brevets Bendix Europe 126 rue de Stalingrad**
**F-93700 Drancy (FR)**

EP 0 218 510 B2

## Description

La présente invention concerne les servomoteurs d'assistance au freinage, typiquement du type à dépression, comprenant, dans un boîtier, un ensemble de piston comportant un moyeu tubulaire renfermant un moyen de valve de distribution comprenant un élément de clapet élastique annulaire comportant une partie active susceptible de coopérer sélectivement avec un premier et un second sièges de clapet concentriques formés respectivement dans le moyeu et par un plongeur de valve coulissant dans le moyeu et couplé à une tige d'entrée du servomoteur, l'élément de clapet étant monté dans le moyeu par l'intermédiaire d'un support disposé dans le moyeu et formant un premier appui, extérieur, pour un ressort de rappel de la tige d'entrée et un second appui, intérieur, pour un ressort de valve sollicitant la partie active de l'élément de clapet vers les premier et second sièges de clapet.

Un servomoteur de ce type est décrit dans le document FR-A-1 512 696, dont le contenu est supposé intégré ici pour référence. Dans ce document, comme dans la plupart des servomoteurs d'assistance existants, l'élément de clapet annulaire présente une forme générale en tulipe avec un bourrelet extérieur pour son montage, en association avec le support d'élément de clapet, dans le moyeu tubulaire de l'ensemble de piston, la partie active de l'élément de clapet étant reliée à ce bourrelet de montage par un voile mince s'évasant vers l'extérieur pour son raccordement au bourrelet de montage. Dans un tel agencement, l'élément de voile intermédiaire de l'élément de clapet est soumis, lors de la vie utile du servomoteur, à de très nombreuses sollicitations en flexion et en compression pouvant induire à la longue une fragilisation, à cet endroit, du matériau élastomère constitutif de l'élément de clapet. De plus, en fonctionnement, cette partie de voile intermédiaire de l'élément de clapet est soumise à une différentielle de pression entre l'atmosphère régnant en permanence à l'intérieur du moyeu tubulaire, autour de la tige d'entrée, et le vide régnant en permanence dans la chambre annulaire entourant cette partie de voile intermédiaire de l'élément de clapet et reliée en permanence à la chambre avant, ou chambre à dépression, du servomoteur. Cette différentielle de pression, outre qu'elle contribue à la fatigue de la partie de voile intermédiaire, induit sur la partie active de l'élément de clapet une force axiale s'ajoutant à la force du ressort de valve et que doit vaincre le plongeur de valve lors de chaque phase de relâchement du freinage pour dégager la partie active de l'élément de clapet du premier siège de clapet formé dans le moyeu et rétablir la communication entre la chambre de travail arrière du servomoteur et la chambre de dépression, ce qui impose un surdimensionnement du ressort de rappel de la tige d'entrée se traduisant notamment par une perte de sensibilité "pédale" lors de la mise en oeuvre du servomoteur.

La présente invention a pour objet de proposer un servomoteur d'assistance au freinage du type défini ci-dessus, de conception simple et robuste, de faibles coûts de fabrication, présentant une longévité accrue au niveau de l'élément de clapet et permettant de réduire la force du ressort de rappel de la tige d'entrée en offrant ainsi, par voie de conséquence, une sensibilité accrue en fonctionnement.

Pour ce faire, selon une caractéristique de l'invention, l'élément de clapet comporte une partie tubulaire ondulée axiale montée par son extrémité opposée à la partie active sur une extrémité intérieure du support, réalisé avantageusement en tôle et monté typiquement par sa périphérie externe dans le moyeu tubulaire avec interposition d'un joint d'étanchéité annulaire.

Avec un tel agencement, l'élément de clapet expose à la différentielle de pression une surface effective susceptible d'induire un effort axial extrêmement réduit , obviant ainsi aux inconvénients susmentionnés, la partie tubulaire ondulée axiale étant mieux adaptée à subir les mouvements de compression et d'extension que la partie de voile intermédiaire évasée des éléments de clapet de l'art antérieur, les coûts globaux de fabrication de l'élément de clapet pouvant être réduits en conséquence.

D'autres caractéristiques et avantages de la présente invention ressortiront de la description suivante d'un mode de réalisation, donné à titre illustratif mais nullement limitatif, fait en relation avec les dessins annexés, sur lesquels :

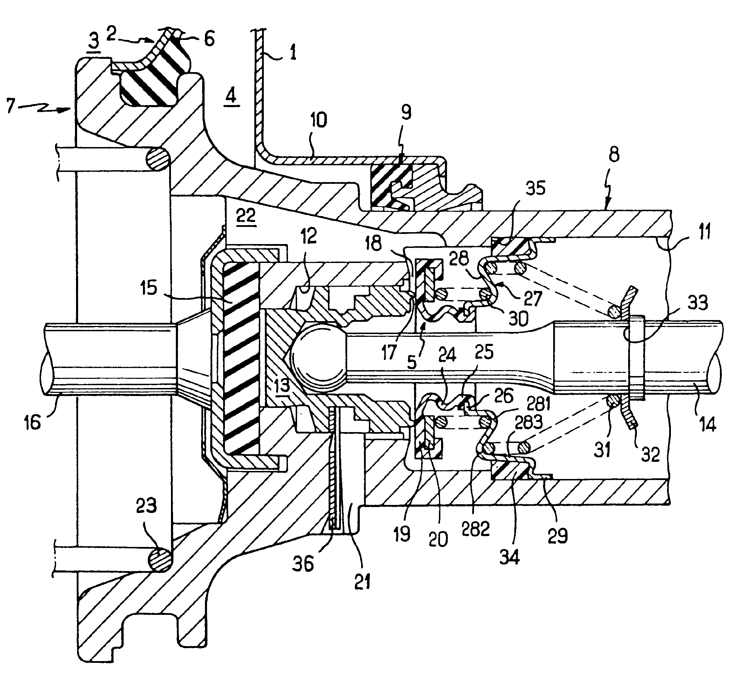

La figure 1 unique représente une vue schématique partielle en coupe longitudinale de la partie centrale arrière d'un servomoteur d'assistance au freinage selon l'invention.

Le servomoteur d'assistance au freinage selon l'invention comprend, classiquement, un boîtier, constitué par l' assemblage périphérique de deux coquilles de boîtier, dont on reconnaît la partie centrale de la coquille arrière 1 sur la figure, dans lequel est disposé un ensemble de piston, désigné généralement par la référence 2 divisant l'intérieur du boîtier en une chambre avant 3, ou chambre à dépression, destinée à être reliée en permanence à une source de vide d'un véhicule automobile, par exemple la tubulure d'admission du moteur de ce véhicule (non représentée), et une chambre arrière ou chambre de travail 4 susceptible d'être mise sélectivement en communication soit avec la chambre avant 3 soit avec l'atmosphère par l'intermédiaire d'un moyen de valve, comportant un élément de clapet élastique, désigné généralement par la référence 5, comme on le verra plus avant. L'ensemble de piston 2 est constitué d'une structure de paroi mobile à membrane 6 et d'un moyeu, désigné généralement par la référence 7, comprenant une partie de moyeu tubulaire arrière 8 montée à coulissement étanche, avec interposition d'un ensemble 9 d'une bague de guidage et d'un joint d'étanchéité coulissant, dans une cheminée centrale arrière 10 de la paroi arrière 1 du boîtier. La partie de moyeu tubulaire 8 est formée avec un logement étagé intérieur 11 communiquant en permanence, par l'arrière, avec l'atmosphère, et se raccordant, vers l'avant, avec un alésage central 12 dans lequel est monté coulissant un plongeur de valve 13 couplé à une tige d'entrée 14 du servomoteur, destinée à être reliée à une pédale de frein (non représentée) du véhicule et s'étendant axialement centralement dans le logement étagé 11. Le moyeu 7 supporte également, avec interposition d'un disque de réaction élastique 15, avec lequel le plongeur de valve 13 est susceptible de coopérer en engagement de compression, une tige de sortie 16 du servomoteur destinée à être couplée à un piston d'un maître-cylindre (non représenté) associé au servomoteur d'assistance.

L'extrémité arrière du plongeur de valve 13 forme un siège de clapet annulaire central 17, la zone de raccordement entre le logement étagé 11 et l'alésage 12 formant un autre siège de clapet annulaire 18 entourant le précédent et concentrique à celui-ci. L'élément de clapet 5 comporte une partie active annulaire avant 19 d'extension générale radiale, typiquement renforcée par une plaque annulaire métallique 20, destinée à coopérer sélectivement avec les sièges de clapet 17 et 18 de façon à commander la mise en communication de la chambre de travail arrière 4, via un passage d'air 21 formé radialement dans le moyeu 7 et communiquant avec l'alésage 12, avec l'atmosphère régnant dans le logement étagé 11, en arrière de l'élément de clapet 5, ou avec la chambre de dépression avant 3 via des passages d'air 22 formés axialement dans le moyeu 7 et débouchant dans l'extrémité avant du logement étagé 11 autour du siège de clapet 18 et de la partie active 19 de l'élément de clapet 5. Dans la position de repos, représentée sur la figure, l'ensemble de piston 2 est positionné au voisinage de la coquille arrière 1 sous l'effet d'un ressort de rappel de piston 23.

Conformément à l'invention, l'extrémité radialement intérieure de la partie active 19 de l'élément de clapet 5 est prolongée vers l'arrière par une partie tubulaire ondulée axiale 24 venu de matière avec le matériau élastomère de la partie active 19 et se terminant, à l'arrière, par un bourrelet de montage 25 engagé sur une patte d'extrémité intérieure rabattue radialement vers l'intérieur 26 d'un support d'élément de clapet désigné généralement par la référence 27. Ce support d'élément de clapet 27, réalisé avantageusement en tôle, présente, depuis son extrémité intérieure 26, une partie intermédiaire 28 conformée en forme de S, se prolongeant à son tour, radialement vers l'extérieur, par une partie extérieure de montage comportant une zone tubulaire extérieure 29 engagée dans l'alésage arrière de plus grand diamètre du logement étagé 11. L'arrondi intérieur 281 de la partie intermédiaire 28 forme un appui pour un ressort de valve hélicoïdal 30 sollicitant axialement la partie active 19 de l'élément de clapet 5 dans la direction vers les sièges de clapet 17 et 18. L'arrondi extérieur 282 de la partie intermédiaire 28 forme appui pour un ressort de rappel de tige 31 prenant centralement son autre appui sur une collerette 32 rapportée sur la tige d'entrée 14 et coopérant avec un épaulement 33 de cette dernière.

Dans le mode de réalisation représenté, le support annulaire d'élément de clapet 27, constitué sous la forme d'un voile en tôle continu et non ajouré, est monté en place dans le logement étagé 11 avec interposition d'un joint d'étanchéité annulaire 34 prenant appui sur un épaulement s'étendant radialement vers l'intérieur 35 du logement étagé 11 et comprimé radialement entre la paroi interne du logement étagé 11 et la paroi externe de la branche extérieure axiale 283 du S de la partie intermédiaire 28 se raccordant à la partie d'extrémité extérieure 29. En variante, cette partie d'extrémité 29, ou la branche extérieure 283 du S de la partie intermédiaire 28 peut se prolonger axialement vers l'arrière jusqu'à l'extrémité arrière de la partie de moyeu tubulaire 8 en prenant appui sur l'extrémité frontale arrière de cette dernière en coopération avec le bourrelet d'extrémité arrière du soufflet de protection prévu habituellement autour de la partie du moyeu arrière 8 et se reprenant sur la bague de guidage de l'ensemble de guidage et d'étanchéité 9. Le moyeu de piston 7 comporte en outre avantageusement une clé de butée 36 montée dans le passage d'air radial 21 et faisant saillie dans l'alésage 12 pour coopérer avec un épaulement périphérique du plongeur de valve 13 afin de limiter le déplacement relatif vers l'arrière de ce dernier dans l'alésage 12.

Egalement en variante, la collerette 32 peut être montée coulissante sur la tige d'entrée 14 et coopérer extérieurement en butée avec un organe de butée solidaire de la coquille arrière 1, comme décrit dans le document EP-A-0 158 552.

## Revendications

1. Servomoteur d'assistance au freinage comprenant, dans un boîtier (1), un ensemble de piston (2) comportant un moyeu tubulaire (8) renfermant un moyen de valve de distribution comprenant un élément de clapet élastique annulaire (5) comportant une partie active (19) susceptible de coopérer sélectivement avec un premier (18) et un second (17) sièges de clapet concentriques formés respectivement dans le moyeu (8) et par un plongeur de valve ( 13) coulissant dans le moyeu et couplé à une tige d'entrée (14) du servomoteur, l'élément de clapet (5) étant monté dans le moyeu (8) par l'intermédiaire d'un support (27) disposé dans le moyeu et formant un premier appui (282), extérieur, pour un ressort de rappel (31) de la tige d'entrée (14) et un second appui (281), intérieur, pour un ressort de valve (30) sollicitant la partie active (19) de l'élément de clapet (5) vers les premier (18) et second (17) sièges, l'élément de clapet (5) comportant une partie tubulaire axiale (24) montée par son extrémité (25) opposée à la partie active (19) sur une extrémité (26) du support (27), caractérisé en ce que ladite partie tubulaire axiale (24) est ondulée et montée sur l'extrémité radialement intérieure (26) du support (27), et présente un diamètre inférieur à celui dudit ressort de valve (30).

2. Servomoteur selon la revendication 1, caractérisé en ce que la partie active (19) de l'élément de clapet (5) s'étend radialement vers l'extérieur à partir de la partie tubulaire ondulée axiale (24).

3. Servomoteur selon la revendication 1 ou la revendication 2, caractérisé en ce que le support (27) est monté par sa périphérie externe (29) dans le moyeu tubulaire (8) avec interposition d'un joint d'étanchéité annulaire (34).

4. Servomoteur selon l'une des revendications 1 à 3, caractérisé en ce que le support (27) est réalisé en tôle.

5. Servomoteur selon la revendication 4, caractérisé en ce que le support (27) comporte une partie intermédiaire (28) conformée en forme de S, les arrondis (282, 281) du S formant lesdits premier et second appuis.

## Patentansprüche

1. Servomotor zur Bremskraftverstärkung, mit einer in einem Gehäuse (1) vorgesehenen Kolbenanordnung (2) mit einer rohrförmigen Nabe (8), welche eine Verteilerventileinrichtung enthält, die ein ringförmiges elastisches Ventilglied (5) aufweist, wobei das Ventilglied einen aktiven Abschnitt (19) besitzt, der wahlweise mit einem ersten (18) und einem zweiten (17) Ventilsitz zusammenwirkt, welche konzentrisch zueinander in der Nabe (8) gebildet sind, sowie durch einen Ventilstößel (13) in der Nabe gleitet und mit einer Betätigungsstange (14) des Servomotors verbunden ist, wobei ferner das Ventilglied (5) in der Nabe (8) über einen Träger (27) angebracht ist, der in der Nabe angeordnet ist und eine äußere erste Anlage (282) für eine Rückholfeder (31) der Betätigungsstange (14) und eine inere zweite Anlage (281) für eine Ventilfeder (30) bildet, die den aktiven Teil (19) des Ventilgliedes (5) in Richtung auf den ersten (18) und zweiten (17) Ventilsitz vorspannt, und wobei das Ventilglied (5) einen axialen rohrförmigen Abschnitt (24) aufweist, der mit seinem dem aktiven Teil (19) entgegengesetzten Ende (25) an einem Ende (26) des Trägers (27) angebracht ist, dadurch gekennzeichnet, daß der axiale rohrförmige Abschnitt (24) gewellt und an dem radial inneren Ende (26) des Trägers (27) angebracht ist, und hat einen Durchmesser niedriger als der ventilfederdurchmesser (30).

2. Servomotor nach Anspruch 1, dadurch gekennzeichnet, daß der aktive Teil (19) des Ventilgliedes (5) von dem axialen gewellten rohrförmigen Abschnitt (24) radial nach außen verläuft.

3. Servomotor nach Anspruch 1 oder 2, dadurch gekennzeichnet, daß der Träger (27) mit seinem äußeren Umfang (29) in der rohrförmigen Nabe (8) unter Zwischenlage einer Ringdichtung (34) angebracht ist.

4. Servomotor nach einem der Ansprüche 1-3, dadurch gekennzeichnet, daß der Träger (27) aus Blech besteht.

5. Servomotor nach Anspruch 4, dadurch gekennzeichnet, daß der Träger (27) einen Zwischenabschnitt (28) in Form eines S aufweist, wobei die Rundungen (282,281) des S die besagte erste und zweite Anlage bilden.

## Claims

1. Brake booster comprising, inside a housing (1), a piston assembly (2) having a tubular hub (8) enclosing a distribution valve means comprising an annular resilient valve member (5) having an active part (19) capable of cooperating selectively with a first valve seat (18) and a second valve seat (17) which are concentric and are formed, respectively, in the hub (8) and by a valve plunger (13) sliding inside the hub and coupled to an input rod (14) of the booster, said valve member (5) being mounted in the hub (8) by means of a support (27) arranged in the hub and forming a first, external, bearing zone (282) for a return spring (31) causing the return movement of said input rod (14), and a second, internal, bearing zone (281) for a valve spring (30) biasing said active part (19) of said valve member (5) towards said first seat (18) and said second seat (17), the valve member having an axial tubular part (24) mounted, by its end (25) opposite to said active part (19), on an end portion (26) of said support (27), characterized in that the said axial tubular part (24) is undulated and mounted on the radially internal end portion (26) of the support (27), and has a diameter inferior to that of said value spring (30).

2. Booster according to Claim 1, characterized in that said active part (19) of said valve member (5) extends radially outwards from said axial undulated tubular part (24).

3. Booster according to Claim 1 or Claim 2, characterized in that said support (27) is mounted, by its external periphery (29), in said tubular hub (8) with the interposition of a sealing ring (34).

4. Booster according to any of Claims 1 to 3, characterized in that said support (27) is made of sheet metal.

5. Booster according to Claim 4, characterized in that said support (27) has an S-shaped middle part (28), with rounded bends (282, 281) of the S-forming said first and second bearing zones.